# EUROPEAN PATENT APPLICATION

(11) **EP 4 393 706 A1**
(43) Date of publication of application: **03.07.2024**
(21) Application number: 23206646.4
(22) Date of filing: 30.10.2023
(51) Int. Cl.: B33Y 70/00, C08F 220/28, C08F 222/10, C08F 290/06, C08F 290/14

(54) **PHOTOCURABLE COMPOSITION AND SHAPED PRODUCT OF THE PHOTOCURABLE COMPOSITION**

(30) Priority: 28.12.2022 JP 2022211774
(71) Applicant: Sumitomo Rubber Industries, Ltd., Kobe-shi, Hyogo 651-0072 (JP)
(72) Inventor: KURODA, Kenichi, Kobe-shi, Hyogo, 651-0072 (JP); FUJIWARA, Takahiro, Kobe-shi, Hyogo, 651-0072 (JP); ITO, Naoko, Kobe-shi, Hyogo, 651-0072 (JP)
(74) Representative: Manitz Finsterwald Patent- und Rechtsanwaltspartnerschaft mbB

(57) **Abstract**

An object of the present disclosure is to provide a photocurable composition from which a molded product having excellent mechanical properties is obtained. The present disclosure provides a photocurable composition comprising: a urethane (meth)acrylate oligomer and a vinyl monomer, wherein the vinyl monomer contains a monofunctional first monomer having a glass transition temperature (Tg1) of -100 °C or more and 10 °C or less, a monofunctional second monomer having a glass transition temperature (Tg2) of 70 °C or more and 150 °C or less, and a third monomer including a trifunctional or higher functional (meth)acrylate monomer.

## Description

### FIELD OF THE DISCLOSURE

The present disclosure relates to a photocurable composition, more preferably relates to a photocurable composition suitably used for stereolithography.

### DESCRIPTION OF THE RELATED ART

In recent years, a three-dimensional laminating and shaping apparatus (socalled 3D printer) for producing a three-dimensional structure by laminating and curing a resin based on design data of the three-dimensional structure has been put into practice. As the three-dimensional structure produced by the three-dimensional laminating and shaping apparatus, a three-dimensional structure made of a resin is well known.

For example, WO 2017/154335 discloses a rubber composition for three-dimensional laminating and shaping, wherein the rubber composition comprises a liquid rubber. The rubber composition is suitably used to produce an elastic molded product by the three-dimensional laminating and shaping apparatus.

JP 2021-75044 A discloses a polymer composition for stereolithography comprising a liquid polymer and a monomer, wherein the polymer composition for stereolithography has a viscosity of 3,000 mPa·s or less as measured with an E-type viscometer under conditions of a cone plate diameter of ϕ 25 mm and a shear rate of 100 second⁻¹ in an environment of a temperature of 25 °C and a relative humidity of 50 %.

### SUMMARY OF THE DISCLOSURE

The cured product of the conventional photocurable composition used for stereolithography does not have sufficient mechanical properties. The present disclosure has been made in view of the abovementioned circumstances, and an object of the present disclosure is to provide a photocurable composition providing a shaped product having excellent mechanical properties.

The present disclosure provides a photocurable composition comprising: a urethane (meth)acrylate oligomer and a vinyl monomer, wherein the vinyl monomer contains a monofunctional first monomer having a glass transition temperature (Tg1) of -100 °C or more and 10 °C or less, a monofunctional second monomer having a glass transition temperature (Tg2) of 70 °C or more and 150 °C or less, and a third monomer including a trifunctional or higher functional (meth)acrylate monomer.

The photocurable composition according to the present disclosure can be suitably used for stereolithography.

The shaped product obtained by curing the photocurable composition according to the present disclosure has excellent mechanical properties.

### SUMMARY OF THE DISCLOSURE

### <Photocurable composition>

The present disclosure provides a photocurable composition comprising: a urethane (meth)acrylate oligomer and a vinyl monomer, wherein the vinyl monomer contains a monofunctional first monomer having a glass transition temperature (Tg1) of -100 °C or more and 10 °C or less, a monofunctional second monomer having a glass transition temperature (Tg2) of 70 °C or more and 150 °C or less, and a third monomer including a trifunctional or higher functional (meth)acrylate monomer.

### 1. Urethane (meth)acrylate oligomer

The urethane (meth)acrylate oligomer is an oligomer having a (meth)acryloyl group and a urethane bond in the molecule. The (meth)acryloyl group means a methacryloyl group and/or an acryloyl group. An oligomer is a molecule of multiple compounds bonded. The oligomer is preferably, for example, a polymer of about 3 to about 100 compounds bonded together, more preferably a polymer of about 3 to about 50 compounds bonded together, and even more preferably a polymer of about 3 to about 40 compounds bonded together.

Examples of the urethane (meth)acrylate oligomer include a product obtained by a reaction between a urethane prepolymer having an isocyanate group and a (meth)acrylate monomer having a hydroxy group, a product obtained by a reaction between a urethane prepolymer having a hydroxy group and a (meth)acrylate monomer having an isocyanate group, and a product obtained by a reaction between a urethane prepolymer having an amino group and a (meth)acrylate monomer having an isocyanate group. In the present disclosure, (meth)acrylate means acrylate and/or methacrylate.

The urethane prepolymer is preferably a product obtained by a reaction between a polyisocyanate and a polyol. The molecular chain of the urethane prepolymer has a urethane bond formed by the reaction between the polyisocyanate and the polyol. The urethane prepolymer has an isocyanate group or hydroxy group at the terminal of the molecular chain. In addition, in some cases, the urethane prepolymer has an amino group at the terminal of the molecular chain.

The urethane (meth)acrylate oligomer preferably has the polyisocyanate and the polyol deriving from the urethane prepolymer as the constituent component, and may have the polyisocyanate, the polyol and the polyamine deriving from the urethane prepolymer as the constituent component.

Examples of the polyol component constituting the urethane (meth)acrylate oligomer include a low molecular weight polyol having a molecular weight of less than 500, and a high molecular weight polyol having a number average molecular weight of 500 or more.

Examples of the high molecular weight polyol include a polyether polyol, a polyester polyol, a polycaprolactone polyol, a polycarbonate polyol, and an acrylic polyol. Examples of the polyether polyol include polyoxyethylene glycol (PEG), polyoxypropylene glycol (PPG), and polyoxytetramethylene glycol (PTMG). Examples of the polyester polyol include polyethylene adipate (PEA), polybutylene adipate (PBA), and polyhexamethylene adipate (PHMA). Examples of the polycaprolactone polyol include poly-ε-caprolactone (PCL). Examples of the polycarbonate polyol include polyhexamethylene carbonate. The high molecular weight polyol may be used solely, or two or more of them may be used in combination.

The polyol component constituting the urethane (meth)acrylate oligomer preferably includes at least one member selected from the group consisting of the polyether diol, the polyester diol, the polycaprolactone diol and the polycarbonate diol.

The number average molecular weight of the polyol component constituting the urethane (meth)acrylate oligomer is preferably 300 or more, more preferably 500 or more, and even more preferably 1000 or more, and is preferably 10000 or less, more preferably 8000 or less, and even more preferably 5000 or less. If the number average molecular weight of the polyol component is 300 or more, softness can be imparted to the shaped product obtained by curing the photocurable composition. If the number average molecular weight of the polyol component is 10000 or less, hardness can be imparted to the shaped product obtained by curing the photocurable composition.

The number average molecular weight of the polyol component can be measured, for example, by gel permeation chromatography (GPC), using polystyrene as a standard material, tetrahydrofuran as an eluate, and an organic solvent system GPC column (e.g. "Shodex (registered trademark) KF series" available from Showa Denko K.K.) as a column.

The polyol component may include the low molecular weight polyol having the molecular weight of less than 500. Examples of the low molecular weight polyol include a diol such as ethylene glycol, diethylene glycol, triethylene glycol, 1,3-butanediol, 1,4-butanediol, neopentyl glycol and 1,6-hexanediol; and a triol such as glycerin, trimethylolpropane, and hexanetriol. The low molecular weight polyol may be used solely, or two or more of them may be used in combination.

The polyamine constituting the urethane (meth)acrylate oligomer is not particularly limited, as long as the polyamine has two or more amino groups. Examples of the polyamine include an aliphatic polyamine such as ethylene diamine, propylene diamine, butylene diamine and hexamethylene diamine; an alicyclic polyamine such as isophorone diamine and piperazine; and an aromatic polyamine.

The aromatic polyamine is not particularly limited, as long as the aromatic polyamine has two or more amino groups directly or indirectly bonding to an aromatic ring. Herein, "indirectly bonding" means the amino group is bonding to the aromatic ring, for example, via a lower alkylene group. The aromatic polyamine may be, for example, a monocyclic aromatic polyamine having one aromatic ring having two or more amino groups bonding thereto, or a polycyclic aromatic polyamine including two or more aminophenyl groups that have at least one amino group bonding to one aromatic ring.

Examples of the monocyclic aromatic polyamine include a type having amino groups directly bonding to an aromatic ring, such as phenylene diamine, toluene diamine, diethyltoluene diamine and dimethylthiotoluene diamine; and a type having amino groups bonding to an aromatic ring via a lower alkylene group, such as xylylene diamine. In addition, the polycyclic aromatic polyamine may be a poly(aminobenzene) having at least two aminophenyl groups directly bonding to each other, or at least two aminophenyl groups may bond to each other via a lower alkylene group or an alkylene oxide group. Among them, a diaminodiphenyl alkane having two aminophenyl groups bonding to each other via a lower alkylene group is preferable, and 4,4'-diaminodiphenyl methane and its derivative are particularly preferable.

Examples of the polyisocyanate component constituting the urethane (meth)acrylate oligomer include a compound having at least two isocyanate groups. Examples of the polyisocyanate include an aromatic polyisocyanate such as 2,4-tolylene diisocyanate, 2,6-tolylene diisocyanate, a mixture of 2,4-tolylene diisocyanate and 2,6-tolylene diisocyanate (TDI), 4,4'-diphenylmethane diisocyanate (MDI), 1,5-naphthylene diisocyanate (NDI), 3,3'-bitolylene-4,4'-diisocyanate (TODI), xylylene diisocyanate (XDI), tetramethylxylylene diisocyanate (TMXDI), and paraphenylene diisocyanate (PPDI); an alicyclic polyisocyanate or aliphatic polyisocyanate such as 4,4'-dicyclohexylmethane diisocyanate (H₁₂MDI), hydrogenated xylylene diisocyanate (H₆XDI), hexamethylene diisocyanate (HDI), isophorone diisocyanate (IPDI), and norbornene diisocyanate (NBDI); and derivatives of these polyisocyanates. In the present disclosure, two or more of the polyisocyanates may be used in combination.

Examples of the derivative of the polyisocyanate include an adduct-modified product obtained by a reaction between a diisocyanate and a polyhydric alcohol; an isocyanurate-modified product of a diisocyanate; a biuret-modified product; and an allophanate modified product, and the polyisocyanate derivative from which free diisocyanate has been removed is more preferable.

The adduct-modified product is a polyisocyanate obtained by a reaction between a diisocyanate and a polyhydric alcohol. The polyhydric alcohol is preferably a low molecular weight triol such as trimethylolpropane and glycerin. The adduct-modified product is preferably, for example, a triisocyanate obtained by a reaction between a diisocyanate and trimethylolpropane; or a triisocyanate obtained by a reaction between a diisocyanate and glycerin.

The allophanate product is, for example, a triisocyanate obtained by further reacting a diisocyanate with a urethane bond formed by a reaction between a diisocyanate and a low molecular weight diol.

A urethane (meth)acrylic oligomer having a (meth)acryloyl group is obtained by a reaction between the urethane prepolymer having the isocyanate group at the terminal of the molecular chain and the (meth)acrylate having the hydroxy group. Examples of the (meth)acrylate having the hydroxy group include hydroxyalkyl (meth)acrylate such as 2-hydroxyethyl (meth)acrylate, 3-hydroxypropyl (meth)acrylate, 2-hydroxypropyl (meth)acrylate, and 4-hydroxybutyl (meth)acrylate.

A urethane (meth)acrylic oligomer having a (meth)acryloyl group is obtained by a reaction between the urethane prepolymer having the hydroxy group or amino group at the terminal of the molecular chain and a (meth)acrylate having an isocyanate group. Examples of the (meth)acrylate having the isocyanate group include 2-methacryloyloxyethyl isocyanate (trade name "Karenz MOI" available from Resonac Holdings Corporation), 2-acryloyloxyethyl isocyanate (trade name "Karenz AOI" available from Resonac Holdings Corporation), and methacryloyloxyethyl isocyanate ethyl ether (trade name "Karenz MOIEG" available from Resonac Holdings Corporation).

Examples of the urethane (meth)acrylate oligomer include an aliphatic urethane (meth)acrylate oligomer and an aromatic urethane (meth)acrylate oligomer. The aliphatic urethane (meth)acrylate oligomer includes an aliphatic compound as the component constituting the urethane (meth)acrylate oligomer, for example, an aliphatic polyisocyanate is used as the constituent component. The aromatic urethane (meth)acrylate oligomer includes an aromatic compound as the component constituting the urethane (meth)acrylate oligomer, for example, an aromatic polyisocyanate is used as the constituent component. These urethane (meth)acrylate oligomers may be used solely, or two or more of them may be used in combination. From the viewpoint of a better inventive effect, the urethane (meth)acrylate oligomer preferably includes the aliphatic urethane (meth)acrylate oligomer.

The glass transition temperature (Tg) of the urethane (meth)acrylate oligomer is not particularly limited, and it is preferably -100 °C or more, more preferably -90 °C or more, and even more preferably -85 °C or more, and is preferably 50 °C or less, more preferably 10 °C or less, even more preferably -20 °C or less, and particularly preferably -50 °C or less. If the glass transition temperature of the urethane (meth)acrylate oligomer falls within the above range, a mechanical strength can be imparted to the shaped product obtained by curing the photocurable composition while suppressing increase in a glass transition temperature (Tg) of the shaped product.

The urethane (meth)acrylate oligomer preferably has two or more (meth)acryloyl groups in the molecule. The number of the (meth)acryloyl groups in one molecule is not particularly limited, and is preferably 2 or more, and is preferably 10 or less, more preferably 4 or less.

The number average molecular weight of the urethane (meth)acrylate oligomer is preferably 300 or more, more preferably 1000 or more, and even more preferably 3000 or more, and is preferably 30000 or less, more preferably 20000 or less, and even more preferably 15000 or less. If the number average molecular weight of the urethane (meth)acrylate oligomer falls within the above range, the processability in the stereolithography is better, and the shaped product obtained by curing the photocurable composition is excellent in curing shrinkage ratio or mechanical strength.

### 2. Vinyl monomer

The photocurable composition according to the present disclosure comprises a vinyl monomer. The vinyl monomer contains a monofunctional first monomer having a glass transition temperature (Tg1) of -100 °C or more and 10 °C or less, a monofunctional second monomer having a glass transition temperature (Tg2) of 70 °C or more and 150 °C or less, and a third monomer including a trifunctional or higher functional (meth)acrylate monomer.

If the photocurable composition comprises the monofunctional first monomer having the glass transition temperature (Tg1) of -100 °C or more and 10 °C or less, the monofunctional second monomer having the glass transition temperature (Tg2) of 70 °C or more and 150 °C or less, and the third monomer including the trifunctional or higher functional (meth)acrylate monomer as the vinyl monomer, the shaped product obtained by curing the photocurable composition has excellent mechanical properties.

In the present disclosure, the term of "vinyl monomer" means a monomer having a radical-polymerizable carbon-carbon double bond in the molecule. The term of "monofunctional" means having only one radical-polymerizable carbon-carbon double bond in the molecule, and the term of "trifunctional or higher-functional" means having 3 or more radical-polymerizable carbon-carbon double bonds in the molecule.

The first monomer is a monofunctional monomer, and has only one radical-polymerizable carbon-carbon double bond in the molecule.

The second monomer is a monofunctional monomer, and has only one radical-polymerizable carbon-carbon double bond in the molecule.

Specific examples of the vinyl monomer include an aromatic vinyl monomer, a vinyl monomer having a hydroxy group, a vinyl monomer having a carboxyl group, a vinyl monomer having a sulfonic acid group, a vinyl monomer having a phosphoric acid group, a vinyl monomer having a tertiary amine, a vinyl monomer having a quaternary ammonium salt group, a vinyl monomer having a heterocycle, a vinyl amide, a vinyl monomer having an epoxy group, a carboxylic acid vinyl, an α-olefin, a diene, and a (meth)acrylic monomer. These vinyl monomers may be used solely, or two or more of them may be used in combination.

The vinyl monomer preferably includes a (meth)acrylate in view of its excellent photocuring reactivity while providing a viscosity suitable for stereolithography.

Specific examples of the monofunctional (meth)acrylate include ethoxylated nonylphenol acrylate, m-phenoxybenzyl acrylate, phenoxyethyl (meth)acrylate, phenoxy-2-methylethyl (meth)acrylate, phenoxyethoxyethyl (meth)acrylate, 3-phenoxy-2-hydroxypropyl (meth)acrylate, 2-phenylphenoxyethyl (meth)acrylate, 4-phenylphenoxyethyl (meth)acrylate, 3-(2-phenylphenyl)-2-hydroxypropyl (meth)acrylate, (meth)acrylate of a product obtained by a reaction between ethylene oxide and p-cumylphenol, 2-bromophenoxyethyl (meth)acrylate, 2,4-dibromophenoxyethyl (meth)acrylate, 2,4,6-tribromophenoxyethyl (meth)acrylate, phenoxy (meth)acrylate modified with multiple moles of ethylene oxide or propylene oxide, isobornyl (meth)acrylate, bornyl (meth)acrylate, (2-methyl-2-ethyl-1,3-dioxolane-4-yl)methyl (meth)acrylate, tricyclodecanyl (meth)acrylate, dicyclopentanyl (meth)acrylate, dicyclopentenyl (meth)acrylate, cyclohexyl (meth)acrylate, 4-butylcyclohexyl (meth)acrylate, acryloyl morpholine, 2-hydroxyethyl (meth)acrylate, 2-hydroxypropyl (meth)acrylate, 2-hydroxybutyl (meth)acrylate, methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, amyl (meth)acrylate, isoamyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, lauryl (meth)acrylate, stearyl (meth)acrylate, isostearyl (meth)acrylate, tetrahydrofurfuryl (meth)acrylate, butoxyethyl (meth)acrylate, ethoxy diethylene glycol (meth)acrylate, polyethylene glycol mono(meth)acrylate, polypropylene glycol mono(meth)acrylate, methoxy ethylene glycol (meth)acrylate, ethoxyethyl (meth)acrylate, methoxy polyethylene glycol (meth)acrylate, methoxy polypropylene glycol (meth)acrylate, diacetone(meth)acryl amide, isobutoxymethyl(meth)acryl amide, N,N-dimethyl(meth)acryl amide, t-octyl(meth)acryl amide, dimethylaminoethyl (meth)acrylate, diethylaminoethyl (meth)acrylate, 7-amino-3,7-dimethyloctyl (meth)acrylate, N,N-diethyl(meth)acryl amide, and N,N-dimethylaminopropyl(meth)acryl amide.

Examples of the monofunctional vinyl monomer other than the (meth)acrylate include hydroxybutylvinyl ether, laurylvinyl ether, cetylvinyl ether, 2-ethylhexylvinyl ether, and a vinyl monomer (such as N-vinylpyrrolidone, N-vinylcaprolactam, vinylimidazole, and vinylpyridine).

The glass transition temperature (Tg1) of the first monomer is preferably - 100 °C or more, more preferably -70 °C or more, even more preferably -50 °C or more, and particularly preferably -20 °C or more, and is preferably 10 °C or less, more preferably 5 °C or less, even more preferably 0 °C or less, and particularly preferably -5 °C or less. The glass transition temperature (Tg1) of the first monomer is the glass transition temperature of the homopolymer of the first monomer.

Examples of the first monomer having the glass transition temperature (Tg1) of -100 °C or more and 10 °C or less include methyl acrylate (8 °C), ethyl acrylate (-24 °C), 2-ethylhexyl acrylate (-70 °C), 2-ethylhexyl methacrylate (-10 °C), isodecyl methacrylate (-41 °C), n-lauryl methacrylate (-65 °C), 2-hydroxyethyl acrylate (-15 °C), 2-hydroxypropyl acrylate (-7 °C), phenoxyethyl acrylate (-22 °C), lauryl acrylate (-3 °C), isoamyl acrylate (-45 °C), butyl acrylate (-55 °C), ethyl acrylate (-24 °C), ethoxydiethylene glycol acrylate (-70 °C), methoxy-triethylene glycol acrylate (-50 °C), and (2-methyl-2-ethyl-1,3-dioxolane-4-yl) methylacrylate (-7 °C).

The glass transition temperature (Tg2) of the second monomer is preferably 70 °C or more, more preferably 75 °C or more, even more preferably 80 °C or more, and particularly preferably 90 °C or more, and is preferably 150 °C or less, more preferably 130 °C or less, even more preferably 110 °C or less, and particularly preferably 100 °C or less. The glass transition temperature (Tg2) of the second monomer is the glass transition temperature of the homopolymer of the second monomer.

The difference (Tg2-Tg1) between the glass transition temperature (Tg2) of the second monomer and the glass transition temperature (Tg1) of the first monomer is preferably 60 °C or more, more preferably 80 °C or more, even more preferably 90 °C or more, and particularly preferably 100 °C or more, and is preferably 250 °C or less, more preferably 200 °C or less, even more preferably 150 °C or less, and particularly preferably 120 °C or less.

Examples of the second monomer having the glass transition temperature (Tg2) of 70 °C or more and 150 °C or less include isobornyl acrylate (97 °C), t-butyl methacrylate (107 °C), methyl methacrylate (105 °C), styrene (100 °C), acrylic acid (106 °C), and acrylonitrile (97 °C).

For the glass transition temperature (Tg) of the vinyl monomer, for example, glass transition temperatures disclosed in the following websites can be referenced.
https://www.saiden-chem.co.jp/t_sekkei_ema.html
https://www.kyoeisha.co.jp/product/kinou/lightester.php
https://www.kyoeisha.co.jp/product/kinou/lightacrylate.php
https://www.nitto.com/jp/ja/rd/base/adhesive/specificat/

The third monomer includes a trifunctional or higher functional (meth)acrylate monomer. The "trifunctional or higher functional (meth)acrylate monomer" means an acrylate monomer having 3 or more (meth)acryloyl groups in the molecule. The (meth)acryloyl group is a methacryloyl group and/or an acryloyl group. If the photocurable composition according to the present disclosure comprises the trifunctional or higher functional (meth)acrylate monomer as the third monomer, a shaped product having improved mechanical properties (particularly a good balance between the tensile elongation at break and the tensile strength at break) can be obtained.

The third monomer preferably includes a compound represented by the formula (1) or the formula (2) as the trifunctional (meth)acrylate.

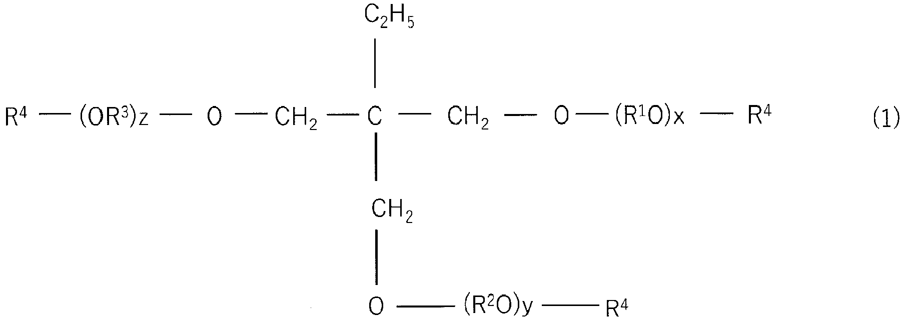

[In the formula (1), R¹ to R³ are identical to or different from each other and are an alkylene group having 2 to 6 carbon atoms. R⁴ is a methacryloyl group or an acryloyl group. X, Y and Z each represent an integer ranging from 0 to 10, and the sum of X, Y and Z ranges from 0 to 20.]

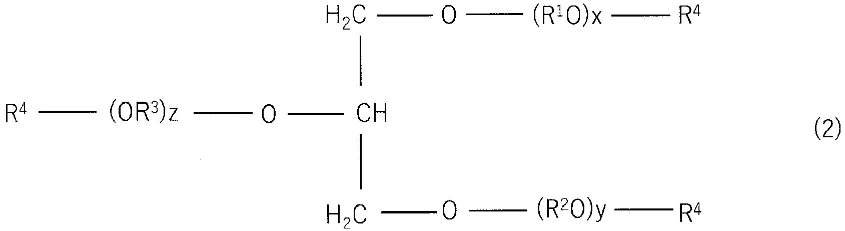

[In the formula (2), R¹ to R³ are identical to or different from each other and are an alkylene group having 2 to 6 carbon atoms. R⁴ is a methacryloyl group or an acryloyl group. X, Y, Z each represent an integer ranging from 0 to 10, and the sum of X, Y and Z ranges from 0 to 20.]

Examples of the alkylene group having 2 to 6 carbon atoms represented by R¹ to R³ in the formula (1) and the formula (2) include an ethylene group, a propylene group, a butylene group, a pentylene group, and a hexylene group, and the ethylene group or the propylene group is preferable.

In the formula (1) and the formula (2), R⁴ is a methacryloyl group (CH₂=C(CH₃)-C (=O)-) or an acryloyl group (CH₂=CH-C (=O)-).

In the formula (1) and the formula (2), X, Y and Z are identical to or different from each other and represent an integer ranging from 0 to 10, and preferably represent an integer ranging from 1 to 8. The sum of X, Y and Z preferably ranges from 0 to 20, more preferably ranges from 1 to 15, and even more preferably ranges from 3 to 15.

As the trifunctional (meth)acrylate used in the present disclosure, a compound represented by the formula (1) in which X=Y=Z=0 and R⁴ is a methacryloyl group or an acryloyl group, or a compound represented by the formula (1) in which X=Y=Z=1, R¹ to R³ are an ethylene group or a propylene group and R⁴ is a methacryloyl group or an acryloyl group is preferable.

It is noted that a compound represented by the formula (1) in which X=Y=Z=0 and R⁴ is a methacryloyl group is trimethylolpropane trimethacrylate, and a compound represented by the formula (1) in which X=Y=Z=0 and R⁴ is an acryloyl group is trimethylolpropane triacrylate.

As the trifunctional (meth)acrylate used in the present disclosure, a compound represented by the formula (2) in which X=Y=Z=0 and R⁴ is a methacryloyl group or an acryloyl group, or a compound represented by the formula (2) in which X=Y=Z=1, R¹ to R³ are an ethylene group or a propylene group and R⁴ is a methacryloyl group or an acryloyl group is preferable, and a compound represented by the formula (2) in which X=Y=Z=1, R¹ to R³ are a propylene group and R⁴ is an acryloyl group is more preferable.

It is noted that a compound represented by the formula (2) in which X=Y=Z=0 and R⁴ is a methacryloyl group is glyceryl trimethacrylate, and a compound represented by the formula (2) in which X=Y=Z=0 and R⁴ is an acryloyl group is glyceryl triacrylate.

Specific examples of the trifunctional (meth)acrylate monomer include trimethylolpropane tri(meth)acrylate, alkoxylated (e.g. ethoxylated or propoxylated) trimethylolpropane tri(meth)acrylate, glyceryl tri(meth)acrylate, alkoxylated (e.g. ethoxylated or propoxylated) glyceryl tri(meth)acrylate, pentaerythritol tri(meth)acrylate, and tris(2-(meth)acryloyloxyethyl) isocyanurate. These trifunctional (meth)acrylate monomers may be used solely, or two or more of them may be used in combination.

From the viewpoint of a better inventive effect, the trifunctional (meth)acrylate monomer preferably includes the alkoxylated glyceryl tri(meth)acrylate, more preferably includes propoxylated glyceryl tri(meth)acrylate.

It is noted that, when it is described as, for example, propoxylated (3) glyceryl tri(meth)acrylate, the number "3" in the parenthesis means the total number of the oxypropylene groups in the molecule is 3 (the sum of X, Y and Z is 3).

Examples of the tetrafunctional or higher functional (meth)acrylate include ditrimethylolpropane tetra(meth)acrylate, dipentaerythritol tetra(meth)acrylate, (di)pentaerythritol penta(meth)acrylate, dipentaerythritol hexa(meth)acrylate, pentaerythritol hexa(meth)acrylate, 1,2,3-cyclohexane tetramethacrylate, tripentaerythritol hexatriacrylate, and 1,2,4-cyclohexane tetra(meth)acrylate.

The glass transition temperature (Tg) of the homopolymer of the trifunctional or higher functional (meth)acrylate monomer is not particularly limited, and it is preferably more than 10 °C, more preferably 12 °C or more, and even more preferably 15 °C or more, and is preferably less than 70 °C, more preferably 50 °C or less, and even more preferably 30 °C or less. If the glass transition temperature of the trifunctional or higher functional (meth)acrylate monomer falls within the above range, the shaped product obtained by curing the photocurable composition has further enhanced mechanical properties.

The amount of the urethane (meth)acrylate oligomer is preferably 30 mass % or more, more preferably 32 mass % or more, and even more preferably 35 mass % or more, and is preferably 75 mass % or less, more preferably 60 mass % or less, and even more preferably 50 mass % or less, provided that the total amount of the urethane (meth)acrylate oligomer and the vinyl monomer is 100 mass %.

If the amount of the urethane (meth)acrylate oligomer is 75 mass % or less, the viscosity of the photocurable composition is not excessively high, and thus the stereolithography is easier. In addition, if the amount of the urethane (meth)acrylate oligomer is 30 mass % or more, the shaped product obtained by curing the photocurable composition has a non-lowered mechanical strength.

The amount of the vinyl monomer is preferably 25 mass % or more, more preferably 40 mass % or more, and even more preferably 50 mass % or more, and is preferably 70 mass % or less, more preferably 68 mass % or less, and even more preferably 65 mass % or less, provided that the total amount of the urethane (meth)acrylate oligomer and the vinyl monomer is 100 mass %. If the amount of the vinyl monomer falls within the above range, a better inventive effect can be played.

The amount of the first monomer is preferably 15 mass % or more, more preferably 20 mass % or more, and even more preferably 30 mass % or more, and is preferably 60 mass % or less, more preferably 55 mass % or less, and even more preferably 50 mass % or less, provided that the total amount of the urethane (meth)acrylate oligomer and the vinyl monomer is 100 mass %. If the amount of the first monomer falls within the above range, the shaped product obtained by curing the photocurable composition has a certain degree of mechanical strength while having a lowered glass transition temperature (Tg).

The amount of the second monomer is preferably 5 mass % or more, more preferably 8 mass % or more, and even more preferably 10 mass % or more, and is preferably 50 mass % or less, more preferably 30 mass % or less, and even more preferably 20 mass % or less, provided that the total amount of the urethane (meth)acrylate oligomer and the vinyl monomer is 100 mass %. If the amount of the second monomer falls within the above range, the shaped product obtained by curing the photocurable composition has a certain degree of mechanical strength while suppressing increase in a glass translation temperature (Tg) thereof.

The mass ratio (first monomer/second monomer) of the first monomer to the second monomer is preferably 0.5 or more, more preferably 1.0 or more, and even more preferably 2.0 or more, and is preferably 15 or less, more preferably 10 or less, and even more preferably 5 or less. If the mass ratio (first monomer/second monomer) falls within the above range, the inventive effect is better.

The amount of the third monomer is preferably 1 mass % or more, more preferably 2 mass % or more, and even more preferably 3 mass % or more, and is preferably less than 20 mass %, more preferably 18 mass % or less, and even more preferably 15 mass % or less, provided that the total amount of the urethane (meth)acrylate oligomer and the vinyl monomer is 100 mass %.

If the amount of the third monomer is 1 mass % or more, the effect of adding the trifunctional or higher functional (meth)acrylate monomer is enhanced. In addition, if the amount of the third monomer is less than 20 mass %, the shaped product obtained by curing the photocurable composition has a better balance between the tensile strength at break and the tensile elongation at break.

Each of the amount of the urethane (meth)acrylate oligomer, the amount of the first monomer, the amount of the second monomer, and the amount of the third monomer is preferably appropriately determined in the above-described ranges such that the total amount of the urethane (meth)acrylate oligomer and the vinyl monomer is 100 mass %.

### 3. Other component

The photocurable composition according to the present disclosure preferably comprises a photopolymerization initiator. If the photopolymerization initiator is comprised, curing of the above-described photocurable composition can be accelerated. The photopolymerization initiator is not particularly limited, and a conventional photopolymerization initiator that generates a radical by light irradiation can be used.

Examples of the photopolymerization initiator include an alkylphenone-based photopolymerization initiator such as 2-hydroxy-2-methylpropiophenone, 2,2-dimethoxy-2-phenylacetophenone, 1-hydroxycyclohexyl phenylketone, 2-hydroxy-4'-(2-hydroxyethoxy)-2-methylpropiophenone, 2-(4-(methylthio)benzoyl)-2-(4-morpholinyl)propane, 2-(dimethylamino)-1-(4-morpholinophenyl)-2-benzyl-1-butanone, and 2-(dimethylamino)-2-(4-methylbenzyl)-1-(4-morpholinophenyl)butane-1-one; an acylphosphine oxide-based photopolymerization initiator such as phenylbis(2,4,6-trimethylbenzoyl)phosphine oxide, and 2,4,6-trimethylbenzoyldiphenylphosphine oxide; and an oxime esterbased photopolymerization initiator such as 1,2-octanedione,1-(4-(phenylthio)-,2-(O-benzoyloxime)), and ethanone,1-(9-ethyl-6-(2-methylbenzoyl)-9H-carbazole-3-yl)-,1-(O-acetyloxime).

In the stereolithography, a light source having a peak of light intensity in a wavelength range from 390 nm to 410 nm, particularly a light source having a peak of light intensity at a wavelength of 405 nm is primarily used. It is preferable to initiate the radical polymerization of the photocurable composition by irradiating light of such light source. The photopolymerization initiator may be used solely, or two or more of them may be used in combination.

In the stereolithography using such light source, from the viewpoint of suitably curing the photocurable composition, the photocurable composition according to the present disclosure preferably comprises two or more photopolymerization initiators having different absorption bands. For example, a photopolymerization initiator having an absorption band at a wavelength region of 405 nm and a photopolymerization initiator having an absorption band in a wavelength region of 300 nm to 380 nm are preferably used in combination. In the present disclosure, as the photopolymerization initiator, the alkylphenone-based photopolymerization initiator and the acylphosphine oxide-based photopolymerization initiator are preferably used in combination.

The amount of the photopolymerization initiator is preferably 1 part by mass or more, more preferably 1.5 parts by mass or more, and even more preferably 2 parts by mass or more, and is preferably 30 parts by mass or less, more preferably 20 parts by mass or less, even more preferably 10 parts by mass or less, and particularly preferably 5 parts by mass or less, with respect to 100 parts by mass of the total amount of the urethane (meth)acrylate oligomer and the vinyl monomer.

In the case that the alkylphenone-based photopolymerization initiator and the acylphosphine oxide-based photopolymerization initiator are used in combination, the mass ratio (alkylphenone-based photopolymerization initiator/acylphosphine oxide-based photopolymerization initiator) is preferably 0.2 or more, more preferably 0.5 or more, and even more preferably 0.8 or more, and is preferably 5 or less, more preferably 3 or less, and even more preferably 2 or less.

The photocurable composition according to the present disclosure may further comprise various additives as long as the additives do not impair the inventive effect. Examples of the additive include a silane coupling agent, a dilution polymer, a photosensitizer, a filler, a UV screening agent, a dye, a pigment, a leveling agent, a fluidity modifier, a deforming agent, a plasticizer, a polymerization inhibitor, a flame retardant, a dispersion stabilizer, a storage stabilizer, an antioxidant, a metal, a metal oxide, a metal salt, and a ceramic. The additive comprised in the photocurable composition may be one, or at least two.

The photocurable composition according to the present disclosure is easily produced by mixing the urethane (meth)acrylate oligomer, the vinyl monomer, and the photopolymerization initiator or various additives to be contained where necessary.

The photocurable composition according to the present disclosure can be suitably used for stereolithography.

### <Method for producing object having three-dimensional shape by stereolithography>

The present disclosure includes a method for producing an object having a three-dimensional shape from the photocurable composition according to the present disclosure by stereolithography. The method according to the present disclosure for producing the object having the three-dimensional shape by stereolithography preferably has a step of irradiating light to the photocurable composition to cure the photocurable composition according to the present disclosure; and a step of forming the cured photocurable composition into a three-dimensional shape. It is noted that in the present disclosure, the object having the three-dimensional shape produced by the stereolithography is sometimes simply referred to as "shaped product".

As the method producing the shaped product according to the present disclosure, for example, various types of stereolithography such as a SLA type (stereolithography laser type: Stereolithography Apparatus), a DLP type (stereolithography projector (surface exposure) type: Digital Light Processing), and a LCD type (stereolithography liquid display type: Liquid Crystal Display) can be adopted.

The method according to the present disclosure for producing the object having the three-dimensional shape by stereolithography preferably has, for example, the following first step to the Nth step.

In the first step, the photocurable composition according to the present disclosure is supplied on a lithography table, and light is irradiated to the photocurable composition to cure the photocurable composition, and a first layer is formed from the cured product. It is noted that the photocurable composition is preferably supplied on the lithography table in a shape of a layer. The photocurable composition is applied to the locations corresponding to the final three-dimensional shape of the lithography table, and is not necessarily applied to the whole surface of the lithography table.

In the second step, the photocurable composition is supplied on the cured product of the first layer, and light is irradiated on the photocurable composition to cure the photocurable composition, and a second layer is formed from the cured product. It is noted that the photocurable composition is preferably supplied on the first layer in a shape of a layer. The photocurable composition is applied to the locations corresponding to the final three-dimensional shape of the first layer, and is not necessarily applied to the whole surface of the first layer.

The second step is preferably repeated until a Nth step (N is a natural number of 3 or more). In the Nth step, the photocurable composition is supplied on the cured product of the (N-1)th layer, and light is irradiated to the photocurable composition to cure the photocurable composition, and a Nth layer is formed from the cured product. It is noted that the photocurable composition is preferably supplied on the (N-1)th layer in a shape of a layer. The photocurable composition is applied to the locations corresponding to the final three-dimensional shape of the (N-1)th layer, and is not necessarily applied to the whole surface of the (N-1)th layer.

By conducting the first step to the Nth step, the photocurable composition is shaped into an object having a three-dimensional shape where the cured products of the photocurable composition are laminated.

In the method according to the present disclosure for producing the object having the three-dimensional shape by stereolithography, a common 3D printer is preferably used. As the 3D printer, a commercial product can be used.

In the stereolithography, the thickness of a single layer when curing the photocurable composition is preferably, for example, from about 0.01 mm to about 0.5 mm. In addition, the irradiated light is generally ultraviolet light, and preferably includes a light having a wavelength of 405 nm. In addition, the illuminance intensity of the irradiated light is preferably from about 0.1 mW/cm² to about 100 mW/cm² at the measuring wavelength of 405 nm. The light irradiation time per layer for curing a single layer of the photocurable composition varies depending on the type of the stereolithography, and is suitably adjusted. For example, the light irradiation time is about 1 second to about 60 seconds for the DLP type. The shaped product according to the present disclosure is preferably produced in an environment of about a room temperature (e.g. 20 °C to 30 °C).

In addition, after the above described stereolithography, conventional secondary treatments such as high-pressure mercury lamp irradiation, metal halide lamp irradiation, UV-LED irradiation, and heating may be further conducted where necessary. These secondary treatments modify the surface, improve the strength, or accelerate the curing after shaping. The secondary treatment may be conducted in combination with the stereolithography, although the secondary treatment is not always necessary depending on the stereolithography conditions.

### <Shaped product and cured product>

The present disclosure further includes a cured product and a shaped product obtained by curing the photocurable composition according to the present disclosure.

The cured product and shaped product according to the present disclosure preferably have rubber elasticity as a mechanical property. The cured product or shaped product according to the present disclosure preferably has, for example, the following mechanical properties.

The hardness of the cured product and shaped product according to the present disclosure is preferably 20 or more, more preferably 25 or more, and even more preferably 30 or more, and is preferably 100 or less, more preferably 90 or less, and even more preferably 80 or less in Shore A hardness. If the hardness of the cured product and shaped product according to the present disclosure falls within the above range, the cured product and shaped product according to the present disclosure become a substitution for a product required to have rubber elasticity.

The tensile strength at break of the cured product and shaped product according to the present disclosure is preferably 1.5 MPa or more, more preferably 2.0 MPa or more, and even more preferably 3.0 MPa or more. If the tensile strength at break of the cured product and shaped product according to the present disclosure falls within the above range, the cured product and shaped product according to the present disclosure become a substitution for a product required to have rubber elasticity. The upper limit of the tensile strength at break is not particularly limited, but it is generally 50.0 MPa.

The tensile elongation at break of the cured product and shaped product according to the present disclosure is preferably 50% or more, more preferably 80% or more, and even more preferably 100% or more. If the tensile elongation at break of the cured product and shaped product according to the present disclosure falls within the above range, the cured product and shaped product according to the present disclosure become a substitution for a product required to have rubber elasticity. The upper limit of the tensile elongation at break is not particularly limited, but it is generally 500%.

It is noted that the above properties are values measured by the methods described later.

### EXAMPLES

Next, the present disclosure will be described in detail by way of examples. However, the present disclosure is not limited to the examples described below. Various changes and modifications without departing from the spirit of the present disclosure are included in the scope of the present disclosure.

### 1. Evaluation method

### (Hardness of cured product (shaped product))

The Shore A hardness of the obtained cured product (shaped product) (having a shape of the compression piece with ϕ 29×12.5 mm prescribed in JIS K6262: 2013) obtained by curing the photocurable composition was measured according to the method prescribed in JIS K6253-3: 2012.

### (Tensile test of cured product (shaped product))

The tensile strength at break and the tensile elongation at break of the obtained cured product (shaped product) (dumbbell-shaped test piece No. 3 prescribed in JIS K6251 : 2017) obtained by curing the photocurable composition were measured according to JIS K6251: 2017. A greater value of the tensile strength at break means the cured product (shaped product) has higher strength, and a greater value of the tensile elongation at break means the cured product (shaped product) elongates more easily and has better mechanical properties.

### 2. Production of photocurable composition

According to the formulations (parts by mass) shown in Table 1, the following materials were mixed and defoamed with a planetary centrifugal mixer(revolution and rotation type), to prepare photocurable compositions. All the components were mixed uniformly. In Table 1, "-" means that this component is not contained.

As the materials in Table 1, the following materials were used.
·Urethane (meth)acrylate oligomer: CN8899 NS (aliphatic urethane acrylate oligomer, viscosity at 60 °C: 25000 mPa·s to 35000 mPa·s, glass transition temperature: -80 °C) available from Arkema Corporation
·First vinyl monomer: MEDOL-10 (2-methyl-2-ethyl-1,3-dioxolane-4-yl)methyl acrylate, molecular weight: 200.2, viscosity at 25 °C: 5.1 mPa·s, glass transition temperature: -7 °C) available from Osaka Organic Chemical Industry Ltd.

- Second vinyl monomer: IBXA (isobornyl acrylate, molecular weight: 208.3, viscosity at 25 °C: 7.7 mPa·s, glass transition temperature: 97 °C) available from Osaka Organic Chemical Industry Ltd.
- Trifunctional (meth)acrylate monomer: SR9020 NS (propoxylated (3) glyceryl triacrylate (a compound represented by the formula (2) in which X=Y=Z=1, R¹ to R³ = propylene group, and R⁴ = acryloyl group), molecular weight: 428.5, viscosity at 25 °C: 95 mPa·s, glass transition temperature: 18 °C) available from Arkema Corporation
- Photopolymerization initiator 1: Omnirad 819 (acylphosphine oxide-based photopolymerization initiator, phenyl bis(2,4,6-trimethylbenzoyl)phosphine oxide, molecular weight: 418.5) available from IGM Resins B.V.
- Photopolymerization initiator 2: Omnirad 1173 (alkylphenone-based photopolymerization initiator, 2-hydroxy-2-methylpropiophenone, molecular weight: 164.2, viscosity at 25 °C: 25 mPa·s) available from IGM Resins B.V.

**Table 1**

| Photocurable composition No. | | 1 | 2 | 3 | 4 | 5 | 6 | 7 |
|---|---|---|---|---|---|---|---|---|
| Urethane (meth)acrylate oligomer | | 40 | 20 | 30 | 35 | 40 | 40 | 40 |
| First vinyl monomer (Tg: -7 °C) | | 45 | 45 | 45 | 45 | 40 | 35 | 25 |
| Second vinyl monomer (Tg: 97 °C) | | 15 | 15 | 15 | 15 | 15 | 15 | 15 |
| Trifunctional (meth)acrylate monomer | | - | 20 | 10 | 5 | 5 | 10 | 20 |
| Photopolymerization initiator 1 (acylphosphine oxide-based photopolymerization initiator) | | 1.1 | 1.1 | 1.1 | 1.1 | 1.1 | 1.1 | 1.1 |
| Photopolymerization initiator 2 (alkylphenone-based photopolymerization initiator) | | 1.5 | 1.5 | 1.5 | 1.5 | 1.5 | 1.5 | 1.5 |
| Properties of cured product (molded product) | Hardness (Shore A) | 37.4 | 72.2 | 66.3 | 51.3 | 54.8 | 73.8 | 77.8 |
| | Tensile strength at break (MPa) | 1.4 | 11.4 | 7.1 | 4.3 | 2.5 | 12.9 | 14.2 |
| | Tensile elongation at break (%) | 210.7 | 40.2 | 88.7 | 118.2 | 101.6 | 103.4 | 45.8 |

| | | | | | | | | |
|---|---|---|---|---|---|---|---|---|
| Formulation: parts by mass | | | | | | | | |

### 3. Production of shaped product (object having three-dimensional shape)

The shaped product was shaped from the photocurable composition by stereolithography in a DLP mode. Specifically, the shaped product was shaped using a 3D printer provided with a light source (UV-LED) having a peak wavelength of 405 nm, under conditions of a temperature of 23 °C, a lamination pitch of 0.1 mm, an irradiation time per layer of 20 seconds and illuminance intensity at a wavelength of 405 nm of 5.0 mW/cm². The shaped products were prepared in two shapes. One shape is the shape of the test piece with ϕ 29×12.5 mm prescribed in JIS K6262: 2013 used for the above-described hardness measurement, and the other shape is the shape of the dumbbell-shaped test piece No. 3 prescribed in JIS K6251: 2017 used for the above-described tensile test.

The measurement results of the hardness, tensile strength at break and tensile elongation at break of the obtained molded products are shown in Table 1.

As apparent from the results shown in Table 1, the photocurable composition according to the present disclosure comprising: a urethane (meth)acrylate oligomer and a vinyl monomer, wherein the vinyl monomer contains a monofunctional first monomer having a glass transition temperature (Tg1) of -100 °C or more and 10 °C or less, a monofunctional second monomer having a glass transition temperature (Tg2) of 70 °C or more and 150 °C or less, and a third monomer including a trifunctional or higher functional (meth)acrylate monomer, provides a shaped product with excellent mechanical properties, and can be suitably used for stereolithography. In particular, the shaped products obtained by curing the photocurable compositions No. 3 to 6 have a tensile strength at break of 1.5 MPa or more while being a rubberlike product having a tensile elongation at break of 50% or more, and thus have a good balance between the tensile elongation at break and the tensile strength at break.

The photocurable composition according to the present disclosure is suitably used for stereolithography.

The preferable embodiment (1) according to the present disclosure is a photocurable composition comprising: a urethane (meth)acrylate oligomer and a vinyl monomer, wherein the vinyl monomer contains a monofunctional first monomer having a glass transition temperature (Tg1) of -100 °C or more and 10 °C or less, a monofunctional second monomer having a glass transition temperature (Tg2) of 70 °C or more and 150 °C or less, and a third monomer including a trifunctional or higher functional (meth)acrylate monomer.

The preferable embodiment (2) according to the present disclosure is the photocurable composition according to the embodiment (1), wherein an amount of the urethane (meth)acrylate oligomer is 30 mass % or more, provided that a total amount of the urethane (meth)acrylate oligomer and the vinyl monomer is 100 mass %.

The preferable embodiment (3) according to the present disclosure is the photocurable composition according to the embodiment (1) or (2), wherein an amount of the third monomer is less than 20 mass %, provided that a total amount of the urethane (meth)acrylate oligomer and the vinyl monomer is 100 mass %.

The preferable embodiment (4) according to the present disclosure is the photocurable composition according to any one of the embodiments (1) to (3), wherein the urethane (meth)acrylate oligomer includes an aliphatic urethane (meth)acrylate oligomer.

The preferable embodiment (5) according to the present disclosure is the photocurable composition according to any one of the embodiments (1) to (4), wherein the third monomer includes a compound represented by the formula (1) or the formula (2) as a trifunctional (meth)acrylate, 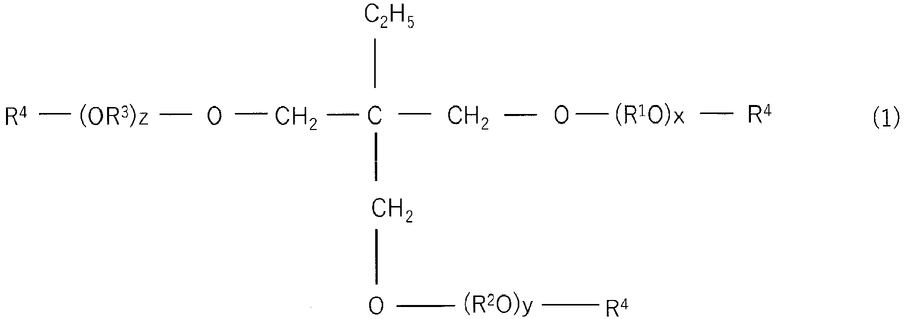 wherein in the formula (1), R¹ to R³ are identical to or different from each other and are an alkylene group having 2 to 6 carbon atoms, R⁴ is a methacryloyl group or an acryloyl group, X, Y and Z each represent an integer ranging from 0 to 10, and the sum of X, Y and Z ranges from 0 to 20.; 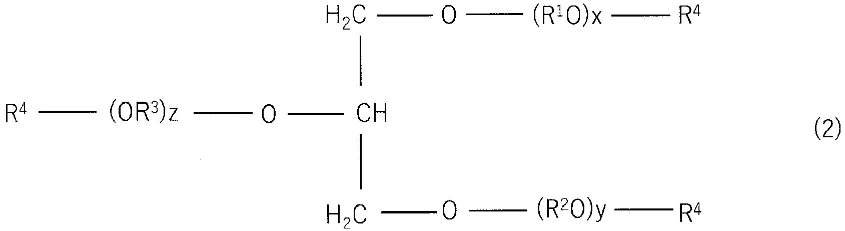 wherein in the formula (2), R¹ to R³ are identical to or different from each other and are an alkylene group having 2 to 6 carbon atoms, R⁴ is a methacryloyl group or an acryloyl group, X, Y and Z each represent an integer ranging from 0 to 10, and the sum of X, Y and Z ranges from 0 to 20.

The preferable embodiment (6) according to the present disclosure is the photocurable composition according to any one of the embodiments (1) to (5), wherein the photocurable composition is for stereolithography.

The preferable embodiment (7) according to the present disclosure is a cured product cured from the photocurable composition according to any one of the embodiments (1) to (5).

The preferable embodiment (8) according to the present disclosure is a shaped product obtained by curing the photocurable composition according to any one of the embodiments (1) to (5) by a photofabrication method.

The preferable embodiment (9) according to the present disclosure is a method for producing an object having a three-dimensional shape from the photocurable composition according to any one of the embodiments (1) to (5) by stereolithography, comprising a step of irradiating light to a photocurable composition to cure the photocurable composition, and forming the cured photocurable composition into the object having a three-dimensional shape,

This application is based on Japanese patent application No. 2022-211774 filed on December 28, 2022, the content of which is hereby incorporated by reference.

## Claims

1. A photocurable composition comprising:
a urethane (meth)acrylate oligomer and a vinyl monomer,
wherein the vinyl monomer contains
a monofunctional first monomer having a glass transition temperature (Tg1) of -100 °C or more and 10 °C or less,
a monofunctional second monomer having a glass transition temperature (Tg2) of 70 °C or more and 150 °C or less, and
a third monomer including a trifunctional or higher functional (meth)acrylate monomer.

2. The photocurable composition according to claim 1, wherein an amount of the urethane (meth)acrylate oligomer is 30 mass % or more, provided that a total amount of the urethane (meth)acrylate oligomer and the vinyl monomer is 100 mass %.

3. The photocurable composition according to claim 1 or 2, wherein an amount of the third monomer is less than 20 mass %, provided that a total amount of the urethane (meth)acrylate oligomer and the vinyl monomer is 100 mass %.

4. The photocurable composition according to any one of claims 1 to 3, wherein the urethane (meth)acrylate oligomer includes an aliphatic urethane (meth)acrylate oligomer.

5. The photocurable composition according to any one of claims 1 to 4, wherein the third monomer includes a compound represented by the formula (1) or the formula (2) as a trifunctional (meth)acrylate, 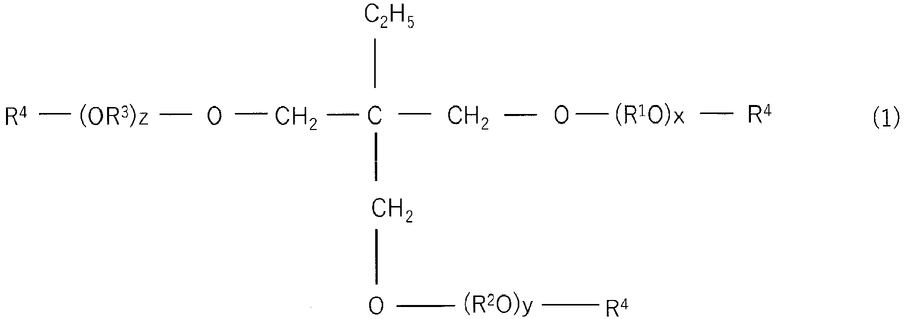 wherein in the formula (1), R¹ to R³ are identical to or different from each other and are an alkylene group having 2 to 6 carbon atoms, R⁴ is a methacryloyl group or an acryloyl group, X, Y and Z each represent an integer ranging from 0 to 10, and the sum of X, Y and Z ranges from 0 to 20.; 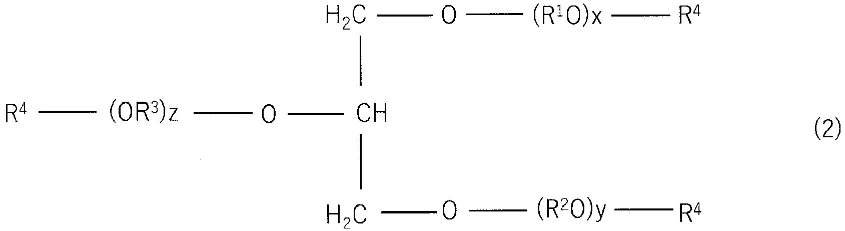 wherein in the formula (2), R¹ to R³ are identical to or different from each other and are an alkylene group having 2 to 6 carbon atoms, R⁴ is a methacryloyl group or an acryloyl group, X, Y and Z each represent an integer ranging from 0 to 10, and the sum of X, Y and Z ranges from 0 to 20.

6. The photocurable composition according to any one of claims 1 to 5, wherein the photocurable composition is for stereolithography.

7. A cured product cured from the photocurable composition according to any one of claims 1 to 6.

8. A shaped product obtained from the photocurable composition according to any one of claims 1 to 6.

9. A method for producing an object having a three-dimensional shape from a photocurable composition by stereolithography, comprising a step of irradiating light to a photocurable composition to cure the photocurable composition, and forming the cured photocurable composition into the object having a three-dimensional shape, wherein the photocurable composition comprises:
a urethane (meth)acrylate oligomer and a vinyl monomer,
wherein the vinyl monomer contains
a monofunctional first monomer having a glass transition temperature (Tg1) of -100 °C or more and 10 °C or less,
a monofunctional second monomer having a glass transition temperature (Tg2) of 70 °C or more and 150 °C or less, and
a third monomer including a trifunctional or higher functional (meth)acrylate monomer.

10. The method according to claim 9, wherein an amount of the urethane (meth)acrylate oligomer is 30 mass % or more, provided that a total amount of the urethane (meth)acrylate oligomer and the vinyl monomer is 100 mass %.

11. The method according to claim 9 or 10, wherein an amount of the third monomer is less than 20 mass %, provided that a total amount of the urethane (meth)acrylate oligomer and the vinyl monomer is 100 mass %.

12. The method according to any one of claims 9 to 11, wherein the urethane (meth)acrylate oligomer includes an aliphatic urethane (meth)acrylate oligomer.

13. The method according to any one of claims 9 to 12, wherein the third monomer includes a compound represented by the formula (1) or the formula (2) as a trifunctional (meth)acrylate, 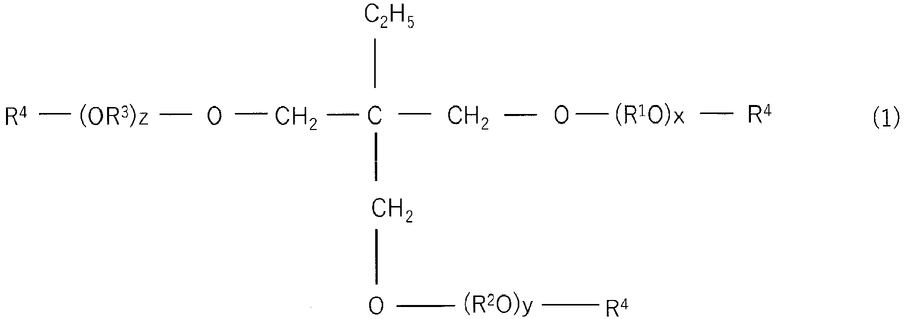 wherein in the formula (1), R¹ to R³ are identical to or different from each other and are an alkylene group having 2 to 6 carbon atoms, R⁴ is a methacryloyl group or an acryloyl group, X, Y and Z each represent an integer ranging from 0 to 10, and the sum of X, Y and Z ranges from 0 to 20.; 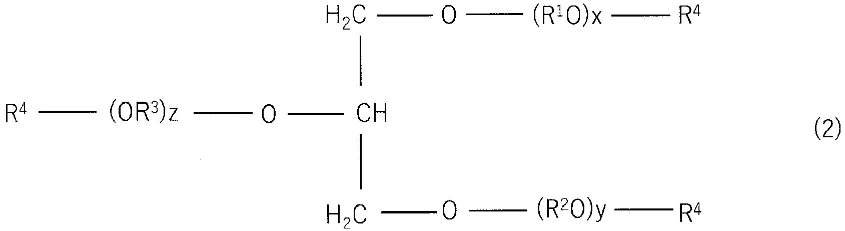 wherein in the formula (2), R¹ to R³ are identical to or different from each other and are an alkylene group having 2 to 6 carbon atoms, R⁴ is a methacryloyl group or an acryloyl group, X, Y and Z each represent an integer ranging from 0 to 10, and the sum of X, Y and Z ranges from 0 to 20.
